# EUROPÄISCHE PATENTANMELDUNG

(11) **EP 3 379 350 A1**
(43) Veröffentlichungstag der Anmeldung: **26.09.2018**
(21) Anmeldenummer: 18401031.2
(22) Anmeldetag: 19.03.2018
(51) Int. Cl.: G05B 13/04

(54) **VERFAHREN ZUM ADAPTIVEN REGELN EINER LANDWIRTSCHAFTLICHEN MASCHINE**

(30) Priorität: 24.03.2017 DE 102017106342
(71) Anmelder: Amazonen-Werke H. Dreyer GmbH & Co. KG, 49205 Hasbergen (DE)
(72) Erfinder: Resch, Rainer, 49170 Hagen a TW (DE); Borchert, Anna-Gret, 49090 Osnabrück (DE)

(57) **Zusammenfassung**

Die Erfindung betrifft ein Verfahren zum adaptiven Regeln einer landwirtschaftlichen Maschine, mit den Schritten: Bereitstellen einer Regelung einer landwirtschaftlichen Maschine mit einem Regelparametersatz, Erfassen der Notwendigkeit einer Parametersatzanpassung zur Adaption des Regelverhaltens der Regelung und Verändern eines oder mehrerer Regelparameter des Regelparametersatzes nach dem Erfassen der Notwendigkeit einer Parametersatzanpassung.

## Beschreibung

Die Erfindung betrifft ein Verfahren zum adaptiven Regeln einer landwirtschaftlichen Maschine nach dem Oberbegriff des Patentanspruchs 1 und eine landwirtschaftliche Maschine nach dem Oberbegriff des Patentanspruchs 12.

Bei einer Vielzahl von landwirtschaftlichen Maschinen kommen Regelungseinrichtungen zum Einsatz, um Betriebsparameter der jeweiligen landwirtschaftlichen Maschine situationsabhängig regeln zu können.

Entsprechende Regelungen kommen beispielsweise bei Düngerstreuern, Feldspritzen und Sämaschinen zum Einsatz, um die auszubringende Menge an Dünger, Pflanzenschutzmittel und Saatgut zu regeln. Darüber hinaus sind Düngerstreuer bekannt, deren Ausbringcharakteristik über eine entsprechende Regelung anpassbar ist. Weitere Regelungen finden sich beispielsweise in Feldspritzen und dienen der Lageanpassung des Spritzgestänges. Darüber hinaus sind Sämaschinen bekannt, deren Arbeitstiefe mittels einer entsprechenden Regelung einstellbar ist.

Die Druckschriften EP 2 205 056 B1 und DE 10 2009 038 243 A1 betreffen landwirtschaftliche Maschinen, welche über eine derartige Regelung verfügen.

Bekannte Regelungen für landwirtschaftliche Maschinen arbeiten dabei mit einem unveränderlichen Regelparametersatz, wodurch eine situationsadäquate Anpassung des Regelverhaltens regelmäßig nicht möglich ist. Die Verwendung eines vorgegebenen Regelparametersatzes ist bei dem Betrieb einer landwirtschaftlichen Maschine häufig nicht ausreichend, um ein Regelungsverhalten abbilden zu können, welches in sämtlichen Betriebssituationen zu einem zufriedenstellenden Maschinenverhalten führt.

Dies ist unter anderem darauf zurückzuführen, dass landwirtschaftliche Maschinen einer Vielzahl von unterschiedlichen äußeren Einflüssen ausgesetzt sind, welche eine Anpassung des Regelverhaltens erfordern. Darüber hinaus lassen sich landwirtschaftliche Maschinen in unterschiedlichen Betriebsmodi betreiben, deren jeweilige Regelungsanforderungen teilweise erheblich voneinander abweichen. Ferner führt der Verschleiß bei landwirtschaftlichen Maschinen regelmäßig zu der Notwendigkeit einer Anpassung des Regelverhaltens, damit mittels der landwirtschaftlichen Maschine weiterhin zufriedenstellende Arbeitsergebnisse erreicht werden können.

Die der Erfindung zugrunde liegende Aufgabe besteht somit darin, die Regelung einer landwirtschaftlichen Maschine zu verbessern, insbesondere dadurch, dass das Regelverhalten adaptiv an einen vorliegenden Betriebszustand und/oder an vorliegende Umgebungsbedingungen anpassbar ist.

Die Aufgabe wird gelöst durch ein Verfahren der eingangs genannten Art, wobei ein oder mehrere Regelparameter des Regelparametersatzes nach dem Erfassen der Notwendigkeit einer Parametersatzanpassung verändert werden.

Die Erfindung macht sich die Erkenntnis zunutze, dass durch das Verändern eines oder mehrerer Regelparameter des Regelparametersatzes eine adaptive Regelung umgesetzt werden kann, deren Regelverhalten nicht länger durch die Vorgabe definierter Regelparameter beschränkt ist. Durch das Verändern eines oder mehrerer Regelparameter kann somit auf einen geänderten Betriebszustand der landwirtschaftlichen Maschine und/oder auf abweichende Umgebungsbedingungen reagiert werden, sodass für die jeweilige Situation stets ein optimales Regelverhalten vorliegt. Beispielsweise kann durch das Verändern eines oder mehrerer Regelparameter des Regelparametersatzes auf eine Änderung von Trägheitsmomenten, Massen, Steifigkeiten, Reibungsverhältnissen, äußeren Lasten und/oder auf die Alterung und/oder den Verschleiß der landwirtschaftlichen Maschine reagiert werden.

In einer besonders bevorzugten Ausführungsform des erfindungsgemäßen Verfahrens umfasst das Erfassen der Notwendigkeit einer Parametersatzanpassung zur Adaption des Regelverhaltens der Regelung das Erfassen eines definierten Zustands der landwirtschaftlichen Maschine und/oder das Erfassen eines definierten Zustands einer Funktionskomponente der landwirtschaftlichen Maschine. Das Verändern des einen oder der mehreren Regelparameter des Regelparametersatzes umfasst dabei vorzugsweise das Einstellen eines vorbestimmten Regelparametersatzes für den erfassten definierten Zustand der landwirtschaftlichen Maschine und/oder den erfassten definierten Zustand der Funktionskomponente der landwirtschaftlichen Maschine. Durch das Erfassen eines definierten Zustandes der landwirtschaftlichen Maschine und/oder einer Funktionskomponente der landwirtschaftlichen Maschine und das entsprechende Einstellen eines vordefinierten Regelparametersatzes lässt sich eine gesteuerte Adaption der Regelung umsetzen. Das Erfassen eines Zustands der landwirtschaftlichen Maschine oder eines Zustands einer Funktionskomponente der landwirtschaftlichen Maschine kann das Erfassen von realen Störgrößen und/oder realen Zustandsgrößen umfassen. Anhand der realen Störgrößen und/oder der realen Zustandsgrößen kann der Zustand der landwirtschaftlichen Maschine oder einer Funktionskomponente der landwirtschaftlichen Maschine identifiziert werden, wobei das Verändern eines oder mehrerer Regelparameter des Regelparametersatzes durch eine feste Zuordnung von Regelparametern zu dem identifizierten Zustand erfolgt.

In einer weiteren bevorzugten Ausführungsform des erfindungsgemäßen Verfahrens wird ein definierter Zustand der landwirtschaftlichen Maschine gezielt herbeigeführt und/oder ein definierter Zustand einer Funktionskomponente der landwirtschaftlichen Maschine gezielt herbeigeführt. Alternativ oder zusätzlich wird eine Testroutine zum Bestimmen des Regelparametersatzes für den gezielt herbeigeführten Zustand der landwirtschaftlichen Maschine ausgeführt und/oder eine Testroutine zum Bestimmen des Regelparametersatzes für den gezielt herbeigeführten Zustand der Funktionskomponente der landwirtschaftlichen Maschine ausgeführt. Das gezielte Herbeiführen eines definierten Zustands der landwirtschaftlichen Maschine und/oder einer Funktionskomponente der landwirtschaftlichen Maschine erfolgt vorzugsweise durch den Hersteller der landwirtschaftlichen Maschine und/oder unter Verwendung von maschineneigener Aktuatorik. Die maschineneigene Aktuatorik kann dabei eingesetzt werden, um einen im Betrieb der landwirtschaftlichen Maschine zu erwartenden Zustand zu simulieren. Durch die Simulation des im Betrieb der landwirtschaftlichen Maschine zu erwartenden Zustands lassen sich im Rahmen einer Testroutine geeignete Regelparametersätze finden, welche zu einem zufriedenstellenden Regelverhalten für den herbeigeführten definierten Zustand führen. Die den jeweiligen Zuständen zugeordneten Regelparametersätze basieren somit auf tatsächlich durchgeführten Maschinentests, wodurch ein wesentlich geeigneteres Regelverhalten herbeigeführt werden kann, als durch die Verwendung von theoretisch berechneten Regelparametersätzen.

Das erfindungsgemäße Verfahren wird ferner dadurch vorteilhaft weitergebildet, dass das Erfassen der Notwendigkeit einer Parametersatzanpassung zur Adaption des Regelverhaltens der Regelung das Vergleichen eines Maschinenverhaltens mit einem Modellverhalten und/oder das Erfassen eines außerhalb eines Akzeptanzbereichs liegenden Maschinenverhaltens umfasst. Das Verändern des einen oder der mehreren Regelparameter des Regelparametersatzes umfasst dabei vorzugsweise das iterative Verändern eines oder mehrerer Regelparameter bis zur Herbeiführung eines innerhalb des Akzeptanzbereichs liegenden Maschinenverhaltens. Durch das Vergleichen des Maschinenverhaltens mit einem Modellverhalten und das anschließende iterative Verändern eines oder mehrerer Regelparameter lässt sich eine geregelte Adaption der Regelung mit einem Vergleichsmodell umsetzen. Das Vergleichen des Maschinenverhaltens mit dem Modellverhalten kann das Vergleichen einer realen gemessenen Ausgangsgröße mit einer simulierten Ausgangsgröße umfassen. Vorzugsweise führt eine Fehlerbetrachtung zwischen den simulierten und gemessenen Ausgangsgrößen zu der Entscheidung, ob eine Veränderung eines oder mehrerer Regelparameter des Regelparametersatzes erfolgt. Führt die Fehlerbetrachtung zu dem Ergebnis, dass ein oder mehrere Regelparameter des Regelparametersatzes anzupassen sind, erfolgt die Modifikation des einen oder der mehreren Regelparameter anhand der Abweichung zwischen den simulierten und gemessenen Ausgangsgrößen, sodass die iterativ eingestellten Regelparameter von der Abweichung des Maschinenverhaltens von dem Modellverhalten abhängen.

In einer anderen bevorzugten Ausführungsform des erfindungsgemäßen Verfahrens umfasst das Erfassen der Notwendigkeit einer Parametersatzanpassung zur Adaption des Regelverhaltens der Regelung das Erfassen des Einflusses der Regelung auf das Maschinenverhalten, das Vergleichen des erfassten Einflusses der Regelung auf das Maschinenverhalten mit einem bei dem eingestellten Regelparametersatz zu erwartenden Maschinenverhalten und/oder das Erfassen eines außerhalb eines Akzeptanzbereichs liegenden Einflusses der Regelung auf das Maschinenverhalten. Das Verändern des einen oder der mehreren Regelparameter des Regelparametersatzes umfasst dabei vorzugsweise das iterative Verändern eines oder mehrerer Regelparameter bis zur Herbeiführung eines innerhalb des Akzeptanzbereichs liegenden Einflusses der Regelung auf das Maschinenverhalten. Auf diese Weise lässt sich eine geregelte Adaption der Regelung ohne Vergleichsmodell umsetzen. Anstelle des Vergleichsmodells wird folglich das Strecken- bzw. Systemverhalten identifiziert oder bestimmt. Das Erfassen des Einflusses der Regelung auf das Maschinenverhalten entspricht in diesem Fall einem Vergleich von Eingangs- und Ausgangsgrößen. Vorzugsweise folgt die iterative Einstellung der Regelparameter einer Adaptionsregel.

Das erfindungsgemäße Verfahren wird ferner dadurch vorteilhaft weitergebildet, dass die landwirtschaftliche Maschine als landwirtschaftliche Spritzeinrichtung und die Regelung der landwirtschaftlichen Maschine vorzugsweise zur Dämpfung der Schwingungen eines Spritzgestänges der landwirtschaftlichen Maschine ausgebildet ist. Spritzgestänge von modernen landwirtschaftlichen Maschinen können in mehreren unterschiedlichen Konfigurationen betrieben werden, insbesondere lässt sich die Arbeitsbreite des Spritzgestänges durch entsprechende Gestängeeinstellungen anpassen. Neben der Konfiguration des Spritzgestänges beeinflusst auch der Verschleißzustand der landwirtschaftlichen Spritzeinrichtung die Schwingungseigenschaften des Spritzgestänges. Damit in sämtlichen Betriebssituationen eine zufriedenstellende Dämpfung der Schwingungen des Spritzgestänges möglich ist, ist eine adaptive Regelung notwendig, bei welcher eine oder mehrere Regelparameter des Regelparametersatzes situationsabhängig veränderbar sind.

Außerdem ist ein erfindungsgemäßes Verfahren bevorzugt, bei welchem das bei der Regelung erfasste Maschinenverhalten das Schwingungsverhalten des Spritzgestänges der landwirtschaftlichen Maschine ist und/oder wobei der bei der Regelung erfasste Zustand einer Funktionskomponente der landwirtschaftlichen Maschine der Klappzustand des Spritzgestänges ist. Durch Verschleißerscheinungen am Spritzgestänge verändert sich das Schwingungsverhalten des Spritzgestänges teilweise erheblich. Das durch den Verschleiß hervorgerufene geänderte Schwingungsverhalten wird in diesem Fall durch das Verfahren erfasst und die Regelung entsprechend angepasst. Zur Bestimmung und Hinterlegung eines geeigneten Regelparametersatzes für unterschiedliche Klappzustände des Spritzgestänges können die unterschiedlichen Klappzustände des Spritzgestänges, beispielsweise vor Auslieferung der landwirtschaftlichen Maschine, gezielt herbeigeführt werden und eine Testroutine zum Bestimmen des Regelparametersatzes für den herbeigeführten Klappzustand des Spritzgestänges ausgeführt werden. Die Regelung verfügt somit für jeden möglichen Klappzustand des Spritzgestänges über einen Regelparametersatz, welcher zu einem gewünschten Regelverhalten der landwirtschaftlichen Maschine führt. Im Betrieb der landwirtschaftlichen Maschine kann dann der Klappzustand des Spritzgestänges erfasst werden, sodass der für den erfassten Klappzustand des Spritzgestänges zuvor ermittelte Regelparametersatz eingestellt werden kann. Das Erfassen des Klappzustands des Spritzgestänges erfolgt beispielsweise mittels einem oder mehreren Winkelsensoren, welche vorzugsweise die Ausrichtung nebeneinander angeordneter Gestängesegmente des Spritzgestänges erfassen.

In einer vorteilhaften Weiterbildung des erfindungsgemäßen Verfahrens umfasst das Erfassen der Notwendigkeit einer Parametersatzanpassung zur Adaption des Regelverhaltens der Regelung das Erfassen der Gestängebeschleunigung an einer ersten Seite des Spritzgestänges und/oder das Erfassen der Gestängebeschleunigung an einer zweiten Seite des Spritzgestänges. Alternativ oder zusätzlich umfasst das Erfassen der Notwendigkeit einer Parametersatzanpassung zur Adaption des Regelverhaltens der Regelung das Erfassen der Position des Spritzgestänges relativ zu dem Rahmen oder dem Aufbau der landwirtschaftlichen Maschine, das Erfassen der Eigenfrequenz des Spritzgestänges und/oder das Erfassen des Klappzustands des Spritzgestänges. Insbesondere erfolgt das Erfassen der Gestängebeschleunigung an der ersten Seite und/oder der zweiten Seite des Spritzgestänges mittels maschineneigener Beschleunigungssensoren, welche an der ersten Seite und/oder der zweiten Seite des Spritzgestänges angeordnet sind. Das Erfassen der Position des Spritzgestänges relativ zu dem Rahmen oder dem Aufbau der landwirtschaftlichen Maschine und/oder das Erfassen der Eigenfrequenz des Spritzgestänges können beispielsweise unter Verwendung von einem oder mehreren Wegsensoren, Geschwindigkeitssensoren, Beschleunigungssensoren und/oder Winkelsensoren erfolgen. Vorzugsweise erlaubt die Aufhängung des Spritzgestänges eine beschränkte Bewegung des Spritzgestänges relativ zu dem Rahmen oder dem Aufbau der landwirtschaftlichen Maschine in einer parallel zur Fahrtrichtung der landwirtschaftlichen Maschine verlaufenden Richtung, wobei das Erfassen der Position des Spritzgestänges relativ zu dem Rahmen oder dem Aufbau der landwirtschaftlichen Maschine zum Erfassen dieser Bewegung des Spritzgestänges parallel zur Fahrtrichtung der landwirtschaftlichen Maschine dient. Das Erfassen des Klappzustands des Spritzgestänges kann das Erfassen der Ausrichtung der Gestängesegmente des Spritzgestänges umfassen. Vorzugsweise erfassen ein oder mehrere Winkelsensoren die Ausrichtung nebeneinander angeordneter Gestängesegmente zueinander, sodass hieraus der Klappzustand des Spritzgestänges hergeleitet werden kann. Alternativ oder zusätzlich kann der Klappzustand des Spritzgestänges auch durch Erfassen des Zustands eines oder mehrerer Stellglieder für die Gestängesegmente des Spritzgestänges und/oder mittels eines oder mehrerer Kraftaufnehmer und/oder mittels einer oder mehreren Kameras erfolgen. Beispielsweise ist das eine oder sind die mehreren Stellglieder für das Klappen der Gestängesegmente des Spritzgestänges als Hydraulikzylinder ausgebildet, wobei der Klappzustand des Spritzgestänges über Drucksensoren in den Hydraulikzylindern erfasst wird.

Darüber hinaus ist ferner ein erfindungsgemäßes Verfahren bevorzugt, bei welchem das Erfassen der Notwendigkeit einer Parametersatzanpassung zur Adaption des Regelverhaltens der Regelung das Erfassen des Einflusses der durch die Regelung verursachten Kraftanregung des Spritzgestänges auf die Bewegung des Spritzgestänges umfasst. Das Erfassen des Einflusses der durch die Regelung verursachten Kraftanregung des Spritzgestänges auf die Bewegung des Spritzgestänges erfolgt vorzugsweise durch das Erfassen der Übertragungsfunktion aus der Kraftanregung des Spritzgestänges und der Bewegung des Spritzgestänges. Ein der Regelung zugrunde liegendes Gütekriterium ist hier beispielsweise die minimale Gestängebeschleunigung.

In einer besonders bevorzugten Ausführungsform des erfindungsgemäßen Verfahrens ist die Regelung der landwirtschaftlichen Maschine zur Steuerung des Fahrwerks der landwirtschaftlichen Maschine, insbesondere von dessen Feder- und Dämpfereigenschaften, ausgebildet. Die für die jeweilige Betriebssituation einer landwirtschaftlichen Maschine idealen Feder- und Dämpfereigenschaften eines Fahrwerks hängen von einer Vielzahl von Einflussparametern ab. Insbesondere die Masse der landwirtschaftlichen Maschine ist hierbei von besonderer Relevanz. Die Masse einer landwirtschaftlichen Maschine kann jedoch, beispielsweise aufgrund der Beladung der landwirtschaftlichen Maschine, erheblich schwanken. Somit ist es offensichtlich, dass eine adaptive Anpassung eines oder mehrerer Regelparameter des Regelparametersatzes notwendig ist, um in sämtlichen Betriebssituationen eine ideale Regelung des Fahrwerks gewährleisten zu können.

In einer besonders bevorzugten Ausführungsform des erfindungsgemäßen Verfahrens ist das bei der Regelung erfasste Maschinenverhalten das Feder- und Dämpferverhalten des Fahrwerks und/oder der bei der Regelung erfasste Zustand einer Funktionskomponente der landwirtschaftlichen Maschine der Füllstand eines Vorratsbehälters der landwirtschaftlichen Maschine. Das Feder- und Dämpferverhalten kann durch einen Vergleich der Beschleunigung von Rädern und Aufbau und/oder durch die Federwege der Federelemente des Fahrwerks erfasst werden. Die Anpassung kann auch auf Grundlage eines Gütekriteriums erfolgen, dieses entspricht beispielsweise dem maximalen Komfort oder der maximalen Sicherheit. Beispielsweise werden in diesem Ausführungsbeispiel unterschiedliche vordefinierte Füllstände des Vorratsbehälters gezielt herbeigeführt und eine Testroutine zum Bestimmen des Regelparametersatzes für die herbeigeführten Füllstände des Vorratsbehälters ausgeführt. Somit liegt der landwirtschaftlichen Maschine für die gezielt herbeigeführten definierten Füllstände des Vorratsbehälters jeweils ein Regelparametersatz vor, welcher zu einem gewünschten Regelverhalten im tatsächlichen Betrieb der Maschine führt.

Die der Erfindung zugrunde liegende Aufgabe wird ferner durch eine landwirtschaftliche Maschine der eingangs genannten Art gelöst, wobei die landwirtschaftliche Maschine zum Ausführen eines Verfahrens nach einer der vorstehend beschriebenen Ausführungsformen ausgebildet ist. Hinsichtlich der Vorteile und Modifikationen der erfindungsgemäßen landwirtschaftlichen Maschine wird auf die Vorteile und Modifikationen des erfindungsgemäßen Verfahrens verwiesen.

Weitere Einzelheiten der Erfindung sind der Figurenbeschreibung und den Zeichnungen zu entnehmen. Es zeigen
- Fig.1: eine schematische Darstellung einer Regelung einer erfindungsgemäßen landwirtschaftlichen Maschine;
- Fig. 2: eine schematische Darstellung einer Regelung einer erfindungsgemäßen landwirtschaftlichen Maschine;
- Fig. 3: eine schematische Darstellung einer Regelung einer erfindungsgemäßen landwirtschaftlichen Maschine;
- Fig. 4: eine schematische Darstellung einer erfindungsgemäßen landwirtschaftlichen Maschine;
- Fig. 5: eine schematische Darstellung einer Regelung der in der Fig. 4 dargestellten landwirtschaftlichen Maschine;
- Fig. 6: eine schematische Darstellung einer alternativen Regelung der in der Fig. 4 dargestellten landwirtschaftlichen Maschine;
- Fig. 7: eine schematische Darstellung einer alternativen Regelung der in der Fig. 4 dargestellten landwirtschaftlichen Maschine; und
- Fig. 8: eine schematische Darstellung einer alternativen Regelung der in der Fig. 4 dargestellten landwirtschaftlichen Maschine.

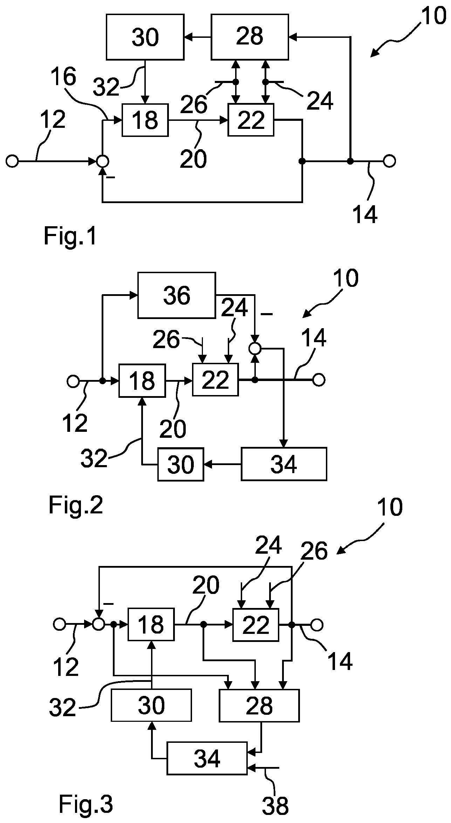

Die Fig. 1 zeigt Regelung 10 einer landwirtschaftlichen Maschine. Bei der Regelung 10 wird die Führungsgröße 12 mit der Regelgröße 14 verglichen, um auf diese Weise die Regelabweichung 16 zu ermitteln.

Die Regelabweichung 16 wird einem Regler 18 zugeführt, wobei der Regler 18 auf Grundlage eines Regelparametersatzes eine Stellgröße 20 ausgibt, welche an eine Regelstrecke 22 übergeben wird. Die Regelstrecke 22 stellt hierbei eine Funktionskomponente der landwirtschaftlichen Maschine dar, deren Verhalten mittels der Regelung 10 geregelt werden soll.

Die Regelung 10 umfasst ein Identifikationsglied 28, welches dazu eingerichtet ist, die Notwendigkeit einer Parametersatzanpassung zur Adaption des Regelverhaltens der Regelung 10 zu erfassen. Zur Erfassung der Notwendigkeit einer Parametersatzanpassung zur Adaption des Regelverhaltens der Regelung 10 berücksichtigt das Identifikationsglied 28 die Regelgröße 14, eine oder mehrere Störgrößen 24 und die Streckenparameter 26.

Die Notwendigkeit einer Parametersatzanpassung wird dadurch erfasst, dass ein definierter Zustand der Funktionskomponente der landwirtschaftlichen Maschine identifiziert wird. In einem Zuordnungsglied 30 sind mehrere unterschiedliche Regelparametersätze für den Regler 18 hinterlegt, wobei jeder der hinterlegten Regelparametersätze einem definierten Zustand der Funktionskomponente der landwirtschaftlichen Maschine zugeordnet ist.

Über das Zuordnungsglied 30 können somit Regelparameter 32 an den Regler 18 übergeben werden, sodass eine Anpassung des Regelparametersatzes nach dem Erfassen der Notwendigkeit einer Parametersatzanpassung erfolgt. Durch das Zuordnungslied 30 lässt sich somit eine gesteuerte Adaption der Regelung 10 umsetzten.

Die in dem Zuordnungsglied 30 hinterlegten Regelparametersätze für den Regler 18 können entweder mittels Datenübertragung an das Zuordnungsglied 30 übermittelt oder mittels einer Testroutine durch die landwirtschaftliche Maschine selbst ermittelt werden. Wenn die Regelparametersätze für den Regler 18 mittels einer Testroutine durch die landwirtschaftliche Maschine selbst ermittelt werden, werden vor der Auslieferung der landwirtschaftlichen Maschine mehrere unterschiedliche Zustände der zu regelnden Funktionskomponente der landwirtschaftlichen Maschine gezielt herbeigeführt und jeweils eine Testroutine zum Bestimmen eines geeigneten Regelparametersatzes für den gezielt herbeigeführten Zustand der Funktionskomponente der landwirtschaftlichen Maschine ausgeführt. Das gezielte Herbeiführen der Zustände der einer Funktionskomponente der landwirtschaftlichen Maschine erfolgt durch den Hersteller der landwirtschaftlichen Maschine und unter Verwendung von maschineneigener Aktuatorik, wobei die Aktuatorik eingesetzt wird, um einen im Betrieb der landwirtschaftlichen Maschine zu erwartenden Zustand zu simulieren.

Die Fig. 2 zeigt eine Regelung, welche eine geregelte Adaption mit Vergleichsmodell umsetzt. Dabei wird in einem Modellglied 36 ein Modellverhalten hinterlegt, welches dem gewünschten Betriebsverhalten der landwirtschaftlichen Maschine entspricht. Das Modellverhalten wird dann mit der Regelgröße 14, also dem tatsächlichen Maschinenverhalten, verglichen. Das Entscheidungsglied 34 entscheidet dann, ob das tatsächliche Maschinenverhalten außerhalb eines Akzeptanzbereichs liegt. Wenn das tatsächliche Maschinenverhalten außerhalb des Akzeptanzbereichs liegt, werden an den Regler 18 geeignete Regelparameter 32 übergeben. Die Anpassung der Regelparameter 32 des Regelparametersatzes erfolgt iterativ, bis das tatsächliche Maschinenverhalten wieder innerhalb des Akzeptanzbereichs liegt.

Die Fig. 3 zeigt eine Regelung 10, welche eine geregelte Adaption ohne Vergleichsmodell umsetzt. Dabei wird in einem Identifikationsglied 28 der Einfluss der Regelung 10 auf das Maschinenverhalten erfasst. Das Erfassen des Einflusses der Regelung 10 auf das Maschinenverhalten erfolgt durch das Bestimmen des Übertragungsverhaltens aus der Regelgröße 14 und der Stellgröße 20. Dadurch, dass das Übertragungsverhalten bestimmt wird, bedarf es keiner Hinterlegung eines Modellverhaltens. Vielmehr wird durch die Bestimmung des Übertragungsverhaltens eine Vergleichsgröße geschaffen, welche sich an das sich kontinuierlich ändernde reale Verhalten der landwirtschaftlichen Maschine anpasst. Beispielsweise wird dann in einem Entscheidungsglied 34 in Abhängigkeit des Adaptionssollwerts 38 bestimmt, ob die Adaption des Regelparametersatzes notwendig ist. Ob die Adaption des Regelparametersatzes notwendig ist, kann jedoch grundsätzlich auch auf eine andere Weise bestimmt werden.

Auf Grundlage des Vergleichs wird nachfolgend entschieden, ob der Einfluss der Regelung 10 auf das Maschinenverhalten außerhalb eines Akzeptanzbereichs liegt. Wenn der Einfluss der Regelung 10 auf das Maschinenverhalten außerhalb des Akzeptanzbereichs liegt, werden an den Regler 18 geeignete Regelparameter 32 übergeben. Die Anpassung der Regelparameter 32 des Regelparametersatzes erfolgt iterativ, bis der Einfluss der Regelung 10 auf das Maschinenverhalten wieder innerhalb des Akzeptanzbereichs liegt.

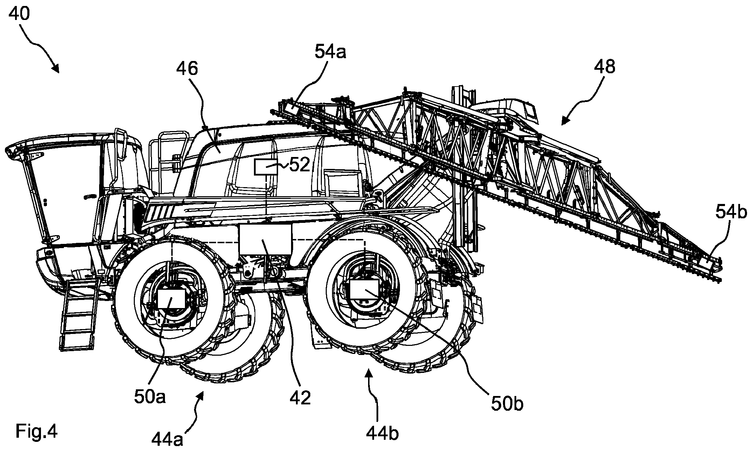

Die Fig. 4 zeigt eine als landwirtschaftliche Spritzeinrichtung ausgebildete landwirtschaftliche Maschine 40. Die landwirtschaftliche Maschine 40 weist eine Regelungseinrichtung 42 auf, welche dazu eingerichtet ist, das Schwingungsverhalten des Spritzgestänges 48 und die Feder- und Dämpfereigenschaften des Fahrwerks 44a, 44b der landwirtschaftlichen Maschine 40 zu steuern. Da das Schwingungsverhalten des Spritzgestänges 48 wesentlich von dem Klappzustand des Spritzgestänges 48 und das Feder- und Dämpferverhalten des Fahrwerks 44a, 44b wesentlich von dem Füllzustand des Vorratsbehälters 46 abhängen, ist eine adaptive Regelung notwendig, damit ein optimales Schwingungsverhalten des Spritzgestänges 48 und ein optimales Feder- und Dämpferverhalten des Fahrwerks 44a, 44b erreicht werden kann.

Zur Umsetzung einer adaptiven Regelung des Schwingungsverhaltens des Spritzgestänges 48 weist die landwirtschaftliche Maschine 40 an den äußeren Enden des Spritzgestänges 48 Beschleunigungssensoren 54a, 54b auf. Außerdem umfasst die landwirtschaftliche Maschine 40 eine Einrichtung (nicht dargestellt) zur Erfassung der Position des Spritzgestänges 48 relativ zu dem Rahmen oder dem Aufbau der landwirtschaftlichen Maschine 40. Das Spritzgestänge 48 ist an mehreren Aufhängungselementen, wie beispielsweise Pendelstangen oder Pendelblechen, aufgehangen, wobei die Aufhängungselemente Bestandteile einer Parallelogramm-Aufhängung sind und die Parallelogramm-Aufhängung eine begrenzte Bewegung des Spritzgestänges 48 relativ zu dem Rahmen oder dem Aufbau der landwirtschaftlichen Maschine 40 und parallel zur Fahrrichtung der landwirtschaftlichen Maschine 40 erlaubt. Die Einrichtung zur Erfassung der Position des Spritzgestänges 48 erfasst mittels einem oder mehreren Winkelsensoren die Ausrichtung einer oder mehrerer Aufhängungselemente, sodass unter Berücksichtigung der geometrischen Größen der Parallelogramm-Aufhängung aus der Ausrichtung der einen oder der mehreren Aufhängungselemente die Position des Spritzgestänges 48 relativ zu dem Rahmen oder dem Aufbau der landwirtschaftlichen Maschine in einer parallel zur Fahrtrichtung der landwirtschaftlichen Maschine 40 verlaufenden Richtung bestimmt werden kann. Zur Umsetzung einer adaptiven Regelung des Feder- und Dämpferverhalten des Fahrwerks 44a, 44b umfasst die landwirtschaftliche Maschine 40 Sensoren 50a, 50b zur Erfassung der Beschleunigungen der Räder und des Aufbaus der landwirtschaftliche Maschine 40 und einen Füllstandsmesser 52 zur Erfassung des Füllstands des Vorratsbehälters 46 der landwirtschaftlichen Maschine 40.

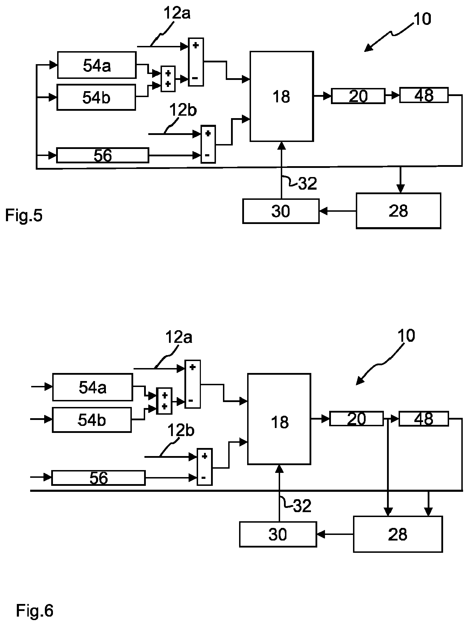

Die Fig. 5 und die Fig. 6 zeigen adaptive Regelungen 10 zur Dämpfung der Schwingungen des Spritzgestänges 48 der landwirtschaftlichen Maschine 40. Bei der Regelung 10 wird mittels der Beschleunigungssensoren 54a, 54b an den Enden des Spritzgestänges 48 die Gestängebeschleunigung erfasst und nachfolgend miteinander addiert, damit die Rotationsbewegungen des Spritzgestänges 48 um die Hochachse kompensiert werden und die Regelung 10 nur auf symmetrisch ausgeprägte Gestängeschwingungen reagiert. Die Summe der Beschleunigungswerte wird dann von der Führungsgröße 12a abgezogen und die sich ergebende Differenz an den Regler 18 übergeben. Ferner wird mittels der Einrichtung 56 zur Erfassung der Position des Spritzgestänges 48 die Position des Spritzgestänges 48 relativ zu dem Rahmen oder dem Aufbau der landwirtschaftlichen Maschine 40 in einer parallel zur Fahrtrichtung der landwirtschaftlichen Maschine 40 verlaufenden Richtung erfasst. Die erfasste Position des Spritzgestänges 48 relativ zu dem Rahmen oder dem Aufbau der landwirtschaftlichen Maschine 40 wird dann von der Führungsgröße 12b abgezogen und die sich ergebende Differenz an den Regler 18 übergeben. Der Regler 18 erzeugt aus den dargestellten Eingangsgrößen eine Stellgröße 20, welche an die Aktuatorik des Spritzgestänges 48 übergeben wird. Die Aktuatorik des Spritzgestänges setzt die Stellgröße 20 in eine Betätigung von Stellgliedern um, wobei die Stellgliederbetätigung zur Kraftanregung des Spritzgestänges 48 und damit zur Dämpfung der Schwingungen des Spritzgestänges 48 der landwirtschaftlichen Maschine 40 führt. Das Identifikationsglied 28 ist dazu eingerichtet, die Notwendigkeit einer Parametersatzanpassung zur Adaption des Regelverhaltens der Regelung 10 zu erfassen.

Die Notwendigkeit einer Parametersatzanpassung wird bei dem in Fig. 5 dargestellten Ausführungsbeispiel dadurch erfasst, dass der Klappzustand des Spritzgestänges 48 identifiziert wird und das Zuordnungsglied 30 dem Regler 18 auf Grundlage des erfassten Klappzustands geeignete Regelparameter 32 übergibt. Auf diese Weise wird somit eine gesteuerte Adaption umgesetzt.

Die Notwendigkeit einer Parametersatzanpassung wird bei dem in Fig. 6 dargestellten Ausführungsbeispiel dadurch erfasst, dass der Einfluss der durch die Regelung 10 verursachten Kraftanregung des Spritzgestänges 48 auf die Bewegung des Spritzgestänges 48 untersucht wird. Der Einfluss der durch die Regelung 10 verursachten Kraftanregung des Spritzgestänges 48 auf die Bewegung des Spritzgestänges 48 wird durch das Bestimmen der Übertragungsfunktion aus der Kraftanregung des Spritzgestänges 48 und der Bewegung des Spritzgestänges 48 untersucht. Wenn der Einfluss der durch die Regelung 10 verursachten Kraftanregung des Spritzgestänges 48 auf die Bewegung des Spritzgestänges 48 außerhalb eines Akzeptanzbereichs liegt, werden die Regelparameter iterativ angepasst, bis der Einfluss der durch die Regelung 10 verursachten Kraftanregung des Spritzgestänges 48 auf die Bewegung des Spritzgestänges 48 wieder innerhalb des Akzeptanzbereichs liegt. Auf diese Weise wird eine geregelte Adaption ohne Vergleichsmodell umgesetzt.

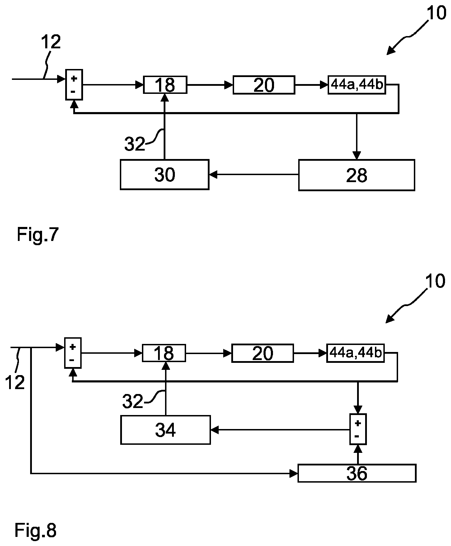

Die Fig. 7 zeigt eine adaptive Regelung 10 für das Fahrwerksverhalten der landwirtschaftlichen Maschine 40, welche zur Steuerung der Feder- und Dämpfereigenschaften des Fahrwerks 44a, 44b der landwirtschaftlichen Maschine 40 ausgebildet ist.
Das Identifikationsglied 28 erfasst dabei über den Füllstandsmesser 52 den Füllstand des Vorratsbehälters 46. In dem Zuordnungsglied 30 sind für unterschiedliche Füllstände des Vorratsbehälters 46 verschiedene Parametersätze hinterlegt. Abhängig von dem erfassten Füllstand des Vorratsbehälters 46 übergibt das Zuordnungsglied 30 geeignete Regelparameter 32 an den Regler 18.

Die Fig. 8 zeigt ebenfalls eine adaptive Regelung 10 für das Fahrwerksverhalten der landwirtschaftlichen Maschine 40, welche zur Steuerung der Feder- und Dämpfereigenschaften des Fahrwerks 44a, 44b der landwirtschaftlichen Maschine 40 ausgebildet ist. In dem Modellglied 36 wird aus einem dort hinterlegten Fahrwerksmodell ein Modellverhalten abgeleitet, welches dem gewünschten Betriebsverhalten der landwirtschaftlichen Maschine 40 in der vorliegenden Situation entspricht. Das Modellverhalten wird dann mit dem tatsächlichen Fahrwerksverhalten verglichen. Bei dem Vergleich werden die Beschleunigungen der Rädern und des Aufbaus der landwirtschaftlichen Maschine 40 und/oder die Federwege der Federelemente des Fahrwerks 44a, 44b mit Werten verglichen, welche aus dem Modellverhalten abgeleitet wurden. Das Entscheidungsglied 34 entscheidet dann, ob das tatsächliche Fahrwerksverhalten außerhalb eines Akzeptanzbereichs liegt. Wenn das tatsächliche Fahrwerksverhalten außerhalb des Akzeptanzbereichs liegt, werden an den Regler 18 geeignete Regelparameter 32 übergeben. Die Anpassung der Regelparameter 32 des Regelparametersatzes erfolgt iterativ, bis das tatsächliche Fahrwerksverhalten wieder innerhalb des Akzeptanzbereichs liegt.

### Bezugszeichenliste

- 10: Regelung
- 12, 12a, 12b: Führungsgrößen
- 14: Regelgröße
- 16: Regelabweichung
- 18: Regler
- 20: Stellgröße
- 22: Regelstrecke
- 24: Störgrößen
- 26: Streckenparameter
- 28: Identifikationsglied
- 30: Zuordnungsglied
- 32: Regelparameter
- 34: Entscheidungsglied
- 36: Modellglied
- 38: Adaptionssollwert
- 40: landwirtschaftliche Maschine
- 42: Regelungseinrichtung
- 44a, 44b: Fahrwerk
- 46: Vorratsbehälter
- 48: Spritzgestänge
- 50a, 50b: Beschleunigungssensoren
- 52: Füllstandsmesser
- 54a, 54b: Beschleunigungssensoren
- 56: Einrichtung

## Patentansprüche

1. Verfahren zum adaptiven Regeln einer landwirtschaftlichen Maschine (40), mit den Schritten:
- Bereitstellen einer Regelung (10) einer landwirtschaftlichen Maschine (40) mit einem Regelparametersatz;
- Erfassen der Notwendigkeit einer Parametersatzanpassung zur Adaption des Regelverhaltens der Regelung (10);
**gekennzeichnet durch** den Schritt:
- Verändern eines oder mehrerer Regelparameter (32) des Regelparametersatzes nach dem Erfassen der Notwendigkeit einer Parametersatzanpassung.

2. Verfahren nach Anspruch 1,
**dadurch gekennzeichnet, dass** das Erfassen der Notwendigkeit einer Parametersatzanpassung zur Adaption des Regelverhaltens der Regelung (10) zumindest einen der folgenden Schritte umfasst:
- Erfassen eines definierten Zustands der landwirtschaftlichen Maschine (40);
- Erfassen eines definierten Zustands einer Funktionskomponente der landwirtschaftlichen Maschine (40);
wobei das Verändern des einen oder der mehreren Regelparameter (32) des Regelparametersatzes vorzugsweise das Einstellen eines vorbestimmten Regelparametersatzes für den erfassten definierten Zustand der landwirtschaftlichen Maschine (40) und/oder den erfassten definierten Zustand der Funktionskomponente der landwirtschaftlichen Maschine (40) umfasst.

3. Verfahren nach Anspruch 2,
**gekennzeichnet durch** zumindest einen der folgenden Schritte:
- gezieltes Herbeiführen eines definierten Zustands der landwirtschaftlichen Maschine (40);
- gezieltes Herbeiführen eines definierten Zustands einer Funktionskomponente der landwirtschaftlichen Maschine (40);
- Ausführen einer Testroutine zum Bestimmen des Regelparametersatzes für den gezielt herbeigeführten Zustand der landwirtschaftlichen Maschine (40);
- Ausführen einer Testroutine zum Bestimmen des Regelparametersatzes für den gezielt herbeigeführten Zustand der Funktionskomponente der landwirtschaftlichen Maschine (40).

4. Verfahren nach einem der vorstehenden Ansprüche,
**dadurch gekennzeichnet, dass** das Erfassen der Notwendigkeit einer Parametersatzanpassung zur Adaption des Regelverhaltens der Regelung (10) zumindest einen der folgenden Schritte umfasst:
- Vergleichen eines Maschinenverhaltens mit einem Modellverhalten;
- Erfassen eines außerhalb eines Akzeptanzbereichs liegenden Maschinenverhaltens;
wobei das Verändern des einen oder der mehreren Regelparameter (32) des Regelparametersatzes vorzugsweise das iterative Verändern eines oder mehrerer Regelparameter (32) bis zur Herbeiführung eines innerhalb des Akzeptanzbereichs liegenden Maschinenverhaltens umfasst.

5. Verfahren nach einem der vorstehenden Ansprüche,
**dadurch gekennzeichnet, dass** das Erfassen der Notwendigkeit einer Parametersatzanpassung zur Adaption des Regelverhaltens der Regelung (10) zumindest einen der folgenden Schritte umfasst:
- Erfassen des Einflusses der Regelung (10) auf das Maschinenverhalten;
- Vergleichen des erfassten Einflusses der Regelung (10) auf das Maschinenverhalten mit einem bei dem eingestellten Regelparametersatz zu erwartendem Maschinenverhalten;
- Erfassen eines außerhalb eines Akzeptanzbereichs liegenden Einflusses der Regelung (10) auf das Maschinenverhalten;
wobei das Verändern des einen oder der mehrerer Regelparameter (32) des Regelparametersatzes vorzugsweise das iterative Verändern eines oder mehrerer Regelparameter (32) bis zur Herbeiführung eines innerhalb des Akzeptanzbereichs liegenden Einflusses der Regelung (10) auf das Maschinenverhalten umfasst.

6. Verfahren nach einem der vorstehenden Ansprüche,
**dadurch gekennzeichnet, dass** die landwirtschaftliche Maschine (40) als landwirtschaftliche Spritzeinrichtung und die Regelung (10) der landwirtschaftlichen Maschine (40) vorzugsweise zur Dämpfung der Schwingungen eines Spritzgestänges (48) der landwirtschaftlichen Maschine (40) ausgebildet ist.

7. Verfahren nach Anspruch 6,
**dadurch gekennzeichnet, dass** das bei der Regelung (10) erfasste Maschinenverhalten das Schwingungsverhalten des Spritzgestänges (48) der landwirtschaftlichen Maschine (40) ist und/oder der bei der Regelung (10) erfasste Zustand einer Funktionskomponente der landwirtschaftlichen Maschine (40) der Klappzustand des Spritzgestänges (48) ist.

8. Verfahren nach Anspruch 6 oder 7,
**dadurch gekennzeichnet, dass** das Erfassen der Notwendigkeit einer Parametersatzanpassung zur Adaption des Regelverhaltens der Regelung (10) zumindest einen der folgenden Schritte umfasst:
- Erfassen der Gestängebeschleunigung an einer ersten Seite des Spritzgestänges (48);
- Erfassen der Gestängebeschleunigung an einer zweiten Seite des Spritzgestänges (48);
- Erfassen der Position des Spritzgestänges (48) relativ zu dem Rahmen oder dem Aufbau der landwirtschaftlichen Maschine (40);
- Erfassen der Eigenfrequenz des Spritzgestänges (48);
- Erfassen des Klappzustands des Spritzgestänges (48).

9. Verfahren nach einem der Ansprüche 6 bis 8,
**dadurch gekennzeichnet, dass** das Erfassen der Notwendigkeit einer Parametersatzanpassung zur Adaption des Regelverhaltens der Regelung (10) den folgenden Schritt umfasst:
- Erfassen des Einflusses der durch die Regelung (10) verursachten Kraftanregung des Spritzgestänges (48) auf die Bewegung des Spritzgestänges (48).

10. Verfahren nach einem der Ansprüche 6 bis 9,
**dadurch gekennzeichnet, dass** die Regelung (10) der landwirtschaftlichen Maschine (40) zur Steuerung des Fahrwerks (44a, 44b) der landwirtschaftlichen Maschine (40), insbesondere von dessen Feder- und Dämpfereigenschaften, ausgebildet ist.

11. Verfahren nach Anspruch 10,
**dadurch gekennzeichnet, dass** das bei der Regelung (10) erfasste Maschinenverhalten das Feder- und Dämpferverhalten des Fahrwerks (44a, 44b) und/oder der bei der Regelung (10) erfasste Zustand einer Funktionskomponente der landwirtschaftlichen Maschine (40) der Füllstand eines Vorratsbehälters (46) der landwirtschaftlichen Maschine (40) ist.

12. Landwirtschaftliche Maschine (40), insbesondere landwirtschaftliche Spritzeinrichtung, mit
- einer Regelungseinrichtung (42) zum adaptiven Regeln der landwirtschaftlichen Maschine (40);
**dadurch gekennzeichnet, dass** die landwirtschaftliche Maschine (40) zum Ausführen eines Verfahrens nach einem der vorstehenden Ansprüche ausgebildet ist.
